# EUROPEAN PATENT SPECIFICATION

(11) **EP 0 824 300 B1**
(45) Date of publication and mention of the grant of the patent: **11.12.2002**
(21) Application number: 96830450.1
(22) Date of filing: 13.08.1996
(51) Int. Cl.: H05B 41/00, H05B 41/282, H02M 1/00

(54) **Inverter for the power supply of discharge lamps with means for improving the power factor**
Wechselrichter zum Speisen von Entladungslampen mit Vorrichtung zur Verbesserung des Leistungsfaktors
Convertisseur pour alimenter lampes à décharge comprenant des moyens d'amélioration du facteur de puissance

(43) Date of publication of application: 18.02.1998
(73) Proprietor: MAGNETEK S.p.A., I-53100 Siena (IT)
(72) Inventor: Canova, Antonio, 52025 Montevarchi, Arezzo (IT)
(74) Representative: Mannucci, Gianfranco, Dott.-Ing.

(56) References cited:
- EP-A- 0 311 424
- EP-A- 0 488 478
- EP-A- 0 621 743
- EP-A- 0 627 871
- EP-A- 0 697 803
- GB-A- 2 261 779
- US-A- 5 426 344
- US-A- 5 517 086

## Description

### Field of the invention

The present invention relates to an inverter device for the power supply of an electrical load, in particular of a discharge lamp.

### Prior art

Devices of this type are described for example in GB-A-2,124,042, EP-A-0 667 734, EP-A-0 488 478, US-A-5,426,344.

A circuit according to the preamble of claim 1 is disclosed in EP-A-0621743.

These devices have a rectifier powered by an AC source, for example the standard electrical mains. In parallel with the rectifier bridge (see for example GB-A-2,124,042) there is provided a filter capacitor and a smoothing capacitor for supplying a substantially DC voltage to an inverter circuit section, comprising controlled switching means for powering a load with an oscillating circuit at a high-frequency voltage. A diode is interposed between the rectifier bridge and the filter capacitor on the one hand and the smoothing or "bulk" capacitor on the other.

Circuits of this type must exhibit a high power factor as close as possible to one and a limited crest factor. Power factor is understood to mean the ratio of active power to apparent power, while crest factor is understood to mean the ratio of the maximum value of the current in the load to its root-mean-square value and measures the amount of fluctuation, at a frequency typically double the frequency of the AC supply, of the peak value of the current at the load. In inverters for the power supply of discharge lamps the oscillation in the peak value of the load current is detrimental since it reduces the lifetime of the lamp.

The object of the present invention is the production of an inverter device which makes it possible to alleviate the drawbacks of conventional devices.

In particular, the object of the invention is to produce an inverter circuit of the type mentioned above which exhibits a greater power factor than conventional circuits.

A further object of an improved embodiment of the invention is the production of a circuit with a reduced crest factor, and in particular a circuit in which it is possible to increase the power factor and reduce the crest factor independently of one another.

### Summary of the invention

These and further objects and advantages, which will become clear to those skilled in the art from reading the following text, are achieved with an inverter circuit according to claim 1. In the device according to the invention in the power-supply section, in series with the rectifier bridge supplied by the AC voltage source, there is arranged an inductor with a value such that the said power-supply section exhibits a predominantly inductive behaviour towards the load. The predominantly inductive behaviour thus achieved causes the inverter and the load powered by it to see a source of current instead of a source of voltage, as in conventional circuits, with a consequent improvement in the power factor of the device.

From EP-A-0488478 an inverter device with a high power-factor input current is known. This device provides an inductor which, however, is not connected in series with the rectifier bridge and upstream of the inverter. The inductor of this prior art device is connected between the rectifier bridge and the resonating load circuit.

The inductor according to the invention and provided in the power supply section can be arranged either upstream or downstream of the rectifier bridge.

An auxiliary capacitor which resonates with the said inductor when the voltage across the terminals of the rectifier bridge passes through the zero value can advantageously be arranged between the inductor and the inverter (consisting for example of a half-bridge structure with two high-frequency controlled cutouts). This makes it possible, as will clearly be seen below with reference to an illustrative implementation of the invention, to reduce the crest factor independently of the power factor.

Upstream of the rectifier bridge, between it and the AC voltage source, there is also advantageously provided, in a manner known per se, an EMI filter (electromagnetic interference filter) against conducted noise, with a cutoff frequency typically greater than 10 kHz.

Further advantageous characteristics and implementations of the invention are indicated in the attached dependent claims.

### Brief description of the drawings

The invention will be better understood by following the description and appended drawing, which shows a practical non-limiting exemplification of the invention. In the drawing:
Fig. 1 shows a schematic of a circuit according to the invention, in a first implementation;
Figs. 2 to 6 show the five successive phases of operation of the circuit of Fig. 1;
Fig. 7 shows a modified implementation of the device according to the invention;
Fig. 8 shows an improvement of the device according to the invention with an auxiliary resonant capacitor;
Figs. 9 and 10 show two diagrams indicating the profile of the current in the inductor in series with the rectifier bridge in the implementation of Fig. 7; and
Figs. 11, 12 and 13 show three diagrams with the profile of the current in the inductor, of the voltage across the terminals of the rectifier bridge and of the current in the auxiliary resonant capacitor, these being obtained in a simulation of the circuit of Fig. 8.

### Detailed description of the invention

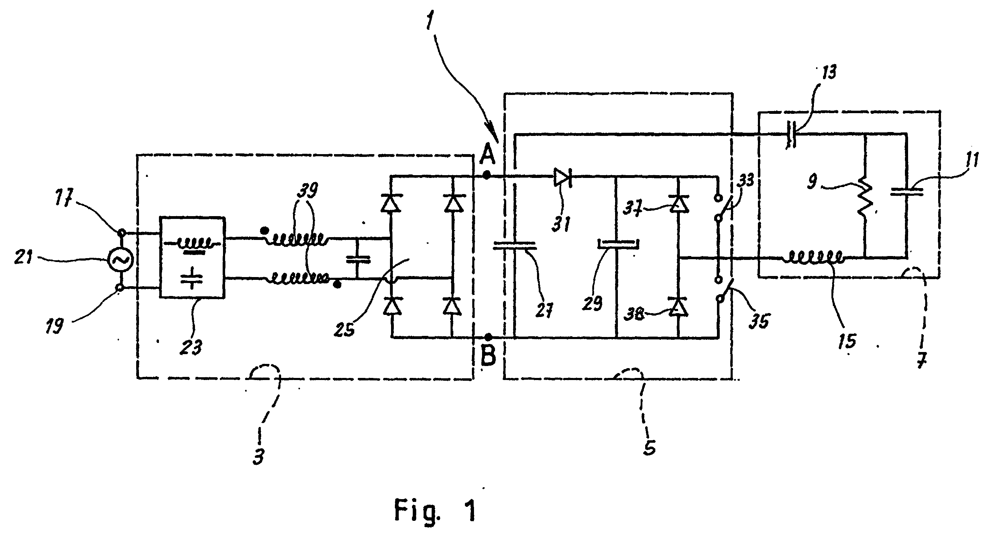

Fig. 1 shows a first implementation of the device according to the invention. The circuit, indicated generally as 1, has a first power-supply section indicated overall as 3 and an inverter section 5 to which is connected a load 7, in the example a discharge lamp represented by a resistor 9 whose electrodes are connected together by a capacitor 11. Indicated as 13 and 15 are a capacitor and an inductor defining a resonant circuit connecting the load to the inverter section 5.

The power-supply section has two terminals 17, 19 for connection to an external AC voltage source 21, for example the standard 50 Hz, 220 V (or 60 Hz, 110 V) electrical mains. An EMI filter 23 with an inductor component, of a type known per se, is interposed between the mains power and the circuit. The AC voltage from the mains is rectified by a rectifier bridge 25, in which the two output poles connected to the inverter section 5 are indicated as A and B. In parallel with the rectifier bridge 25 is arranged a filter capacitor 27, and a second capacitor 29, indicated hereafter as a bulk or smoothing capacitor, is connected in parallel with the rectifier bridge 25 with the interposition of a unidirectional component represented by a diode 31 between the positive pole of the rectifier bridge 25 and a terminal of the bulk capacitor 29. The bulk capacitor 29 supplies a substantially constant voltage to the inverter section. The ratio of the capacitances of the capacitors 29 and 27 is of the order of 100 : 1 to 10,000 : 1 and typically around 1000 : 1. The capacitor 27 can be arranged upstream of the rectifier bridge 25 and/or combined with a further capacitor upstream of the bridge.

The inverter has, furthermore, switching means represented by a half-bridge arrangement schematized by two controlled cutouts (typically two transistors) indicated as 33 and 35 in parallel with respective diodes 37 and 38. The half-bridge is controlled in a manner known per se via a circuit (not shown) for supplying the load 7 with a voltage at high frequency, typically of the order of a few tens of kHz.

Arranged in series with the rectifier bridge 25 is an inductor 39 which, in the example of Fig. 1, is subdivided into two windings arranged respectively on the input arm and on the output arm of the rectifier bridge, between the latter and the filter 23. The value of this inductor is such that the power-supply section 3 is seen by the inverter section 5 as a predominantly inductive source, i.e. basically, virtually a source of current rather than, as in conventional circuits, a source of voltage. The value of the inductor 39 is therefore markedly different from the value of the inductive component normally provided in the filter 23.

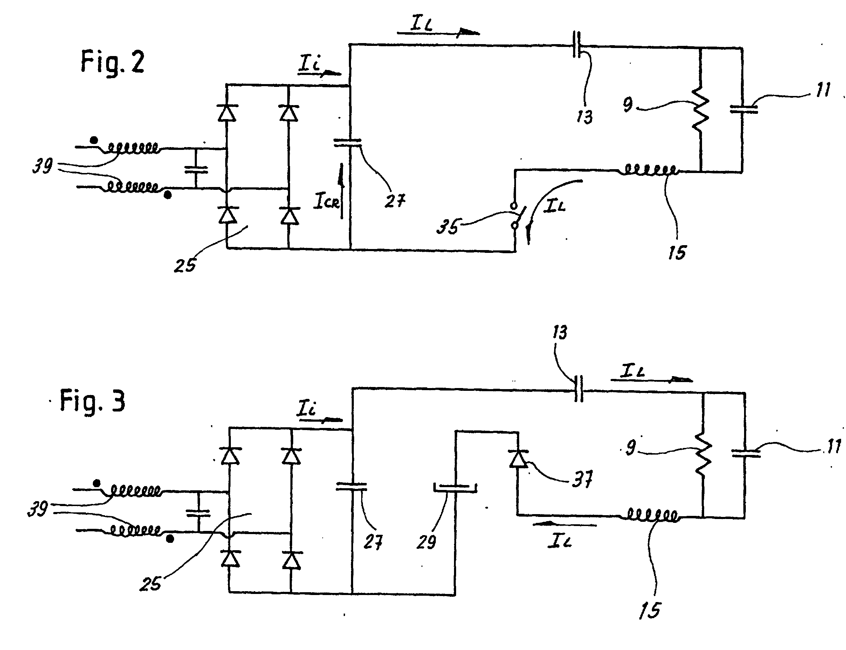

The behaviour of the circuit of Fig. 1 in its various operating phases will now be described with reference to Figs. 2 to 6, which show the circuit elements active in each phase. The current flowing in the circuit will be indicated as follows: I_{L} indicates the current in the load 7, and Iᵢ indicates the current input to the inverter section, i.e. the current at the terminals A and B of the rectifier bridge 25; I_{cr} indicates the current at the filter capacitor 27. The directions of the currents are indicated in the various figures. Furthermore, V_{cr} indicates the voltage across the filter capacitor 27 and V_{b} the voltage across the smoothing or bulk capacitor 29.

The first operating phase is illustrated in Fig. 2: the cutout 33 is open and the cutout 35 is closed. The load current at the initial instant (I_{L}(0)) is zero. During this phase the current I_{cr} which flows through the capacitor 27 is given by the difference between the load current I_{L} and the input current Iᵢ. The capacitor 27 discharges (V_{cr} decreases) if I_{L}-Iᵢ is positive, whereas it charges if the opposite is true. In this phase both conditions may occur.

This first phase ceases when the circuit for controlling the switching means opens the controllable cutout 35.

In the second phase, illustrated in Fig. 3, both cutouts 33, 35 are open. The load current I_{L} flows in the same direction as the previous phase, since the circuit is functioning above the resonant frequency. The current I_{L} flows through the diode 37 and the bulk capacitor 29. The load circuit 7 transfers energy to the bulk capacitor 29.

This second phase ceases when the value of the load current I_{L} passes through zero and reverses its direction.

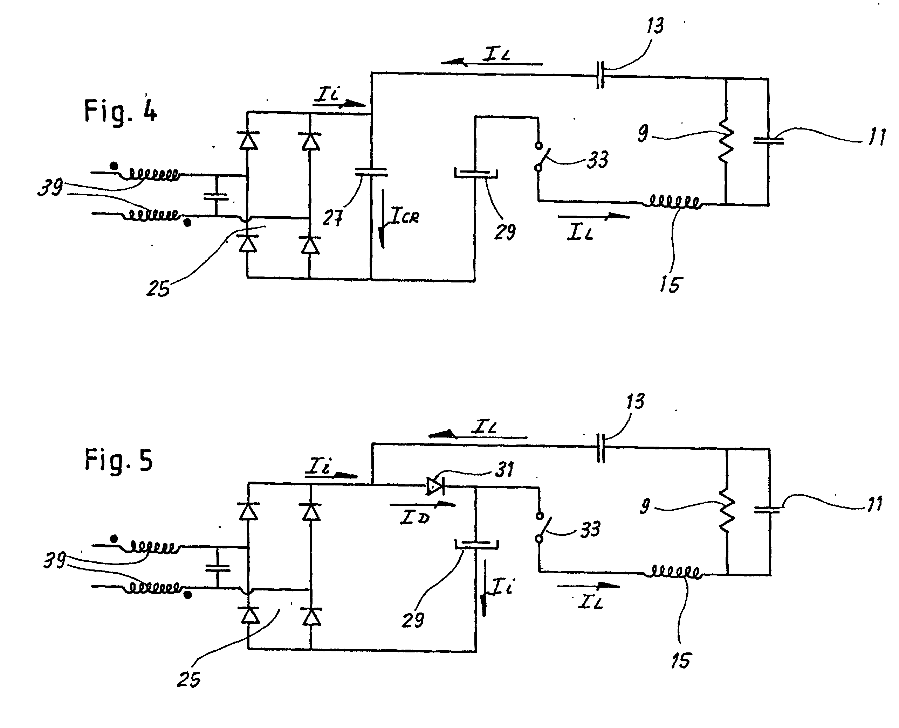

The third phase is represented by the schematic of Fig. 4: the cutout 33 is closed while the cutout 35 is open. The load current at the initial instant (I_{L}(0)) is zero. The bulk capacitor 29 delivers energy to the resonant load circuit, while the capacitor 27 is charged with a current I_{cr} = Iᵢ - I_{L} which flows in the direction indicated in the schematic. The voltage across the capacitor 27 increases until it reaches the value of the voltage of the bulk capacitor 29. At this instant the diode 31 becomes conducting and the fourth phase of the operating cycle of the circuit begins.

The fourth phase is illustrated in Fig. 5. The diode 31 is conducting, the cutout 33 is closed while the cutout 35 is open. The voltages across the capacitors 27 and 29 are equal. The load current I_{L} flows through the diode 31 and the cutout 33, while the input current Iᵢ flows through the diode 31 into the bulk capacitor 29 and charges it. The fourth phase ends and the fifth and last phase begins when the control circuit opens the cutout 33.

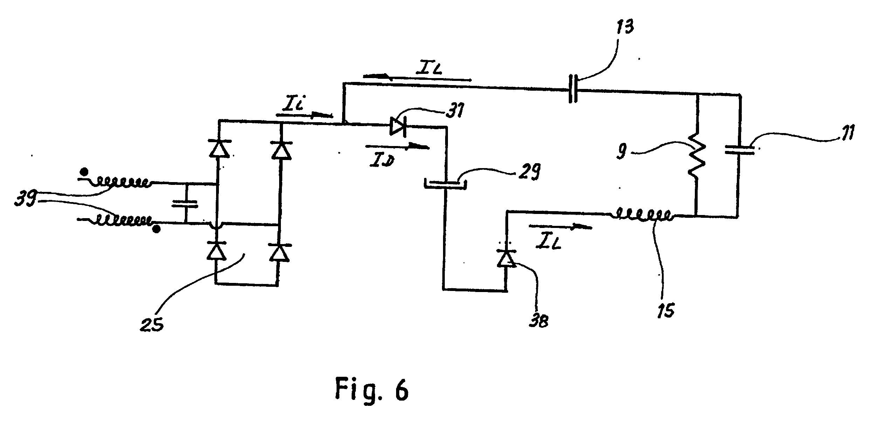

The fifth phase is shown in the schematic of Fig. 6. Both the cutouts 33 and 35 are open, while the diode 38 is conducting. The current I_{D} which flows into the bulk capacitor 29 is given by the sum of the load current I_{L} and the input current Iᵢ. This phase ceases when the control circuit closes the cutout 33 so as to recommence the first phase.

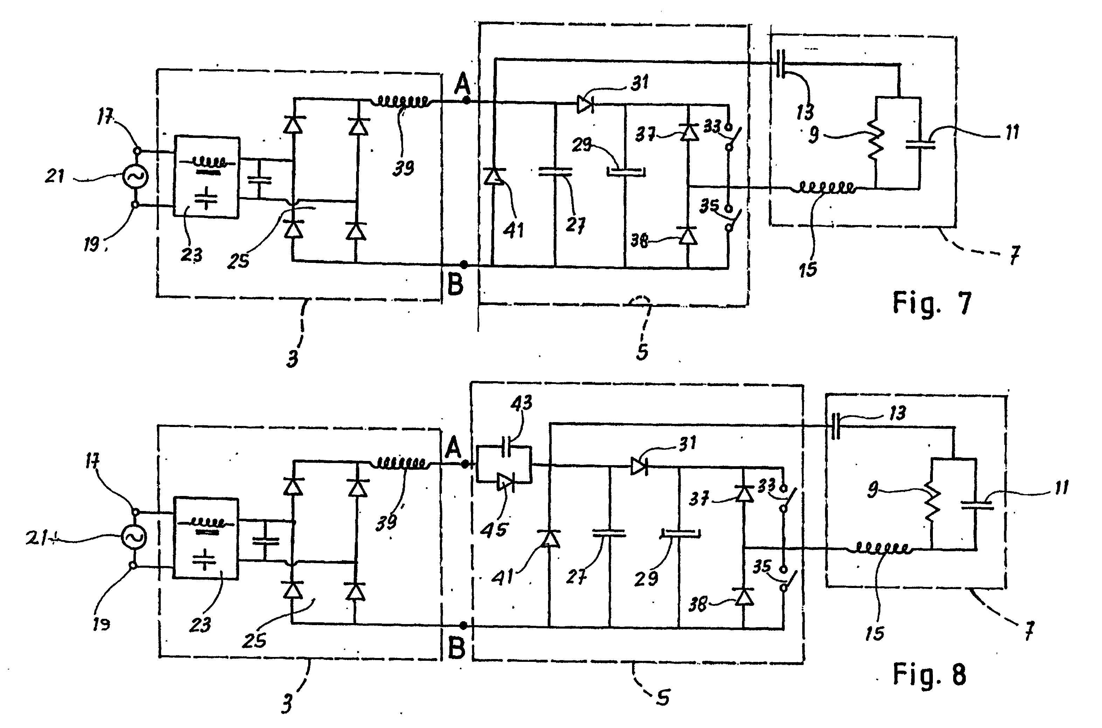

The same succession of phases takes place in a circuit in which the inductor 39 in series with the rectifier bridge 25 is arranged between the latter and the inverter section 5, rather than between the rectifier bridge and the input filter 23. Such a configuration is shown in Fig. 7 where identical numerals are used to indicate parts in this circuit which are identical to or correspond with those of Fig. 1. By comparison with the previous solution, a unidirectional element, represented by the diode 41, is provided in parallel with the filter capacitor 27 in order to avoid inversion of the polarization of the latter.

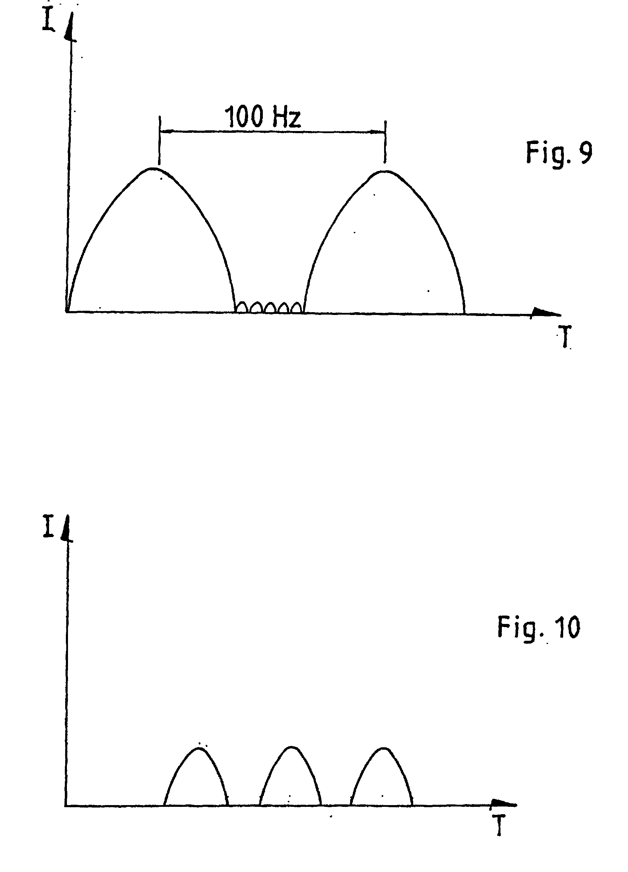

In the circuit now described the current in the inductor 39 versus time has the profile indicated qualitatively in Figs. 9 and 10, where the diagram of Fig. 10 is an enlargement of the intermediate region of oscillation between the two half-waves indicated in the diagram of Fig. 9. It will be observed from the diagrams of Figs. 9 and 10 that, as the mains voltage passes through zero, the current in the inductor undergoes a discontinuous profile oscillating at a frequency equal to the switching frequency of the inverter. This happens because as the mains voltage passes through zero, the energy accumulated in the inductor 39 is low and is transferred to the bulk capacitor 29 before the end of a switching period. The current I_{L} in the load circuit reaches a peak precisely as the mains voltage passes through zero. This happens because in these time intervals the filter capacitor 27 is charged and discharged by the load current I_{L} alone and hence is, for almost the whole of the switching period, in series with the capacitor 13. The overall capacitance of the series arrangement of the capacitors 27 and 13 is approximately equal to the capacitance of the capacitor 27 alone, whose value is much less than the value of the capacitor 13. This brings about a rise in the resonant frequency of the LC resonant circuit which powers the load 7, the circuit consisting of the elements 13, 27 and 15. As the resonant frequency rises and approaches the switching frequency, it brings about an increase in the current in the load and hence an increase in the crest factor. The greater the value of the impedance 39, the greater this increase. Hence, if on the one hand the power factor of the circuit is improved by a high value of the impedance 39, then on the other hand this brings about a deterioration in the crest factor. Therefore, choosing the value of the impedance 39 becomes a matter of compromise between the two effects.

The improved configuration of the circuit of Fig. 8 makes it possible to overcome this limitation since the addition of an auxiliary capacitor 43 (with a corresponding diode 45 which prevents the inversion of its polarization) in series with the impedance 39 uncouples the two phenomena, as will become clear from what follows.

In the circuit of Fig. 8 (in which elements identical to or corresponding with those of the circuits of Figs. 1 and 7 are indicated with the same reference numerals) the capacitor 43 constitutes, together with the inductor 39, an auxiliary resonant circuit. When the mains voltage, i.e. the voltage across the rectifier bridge 25, passes through zero, the capacitor 43 resonates with the inductor 39 and diverts current from the filter capacitor 27. This entails a lowering of the resonant frequency of the circuit containing the capacitive components 27, 29, 43 and the inductive components 15 and 39 and hence a lowering of the current peak on the load and a reduction in the crest factor.

In short, the capacitor 43 functions only within the time interval around the point at which the voltage across the rectifier bridge 25 passes through zero and its effect, in combination with the inductor 39, is to reduce the resonant frequency and hence to limit the crest factor.

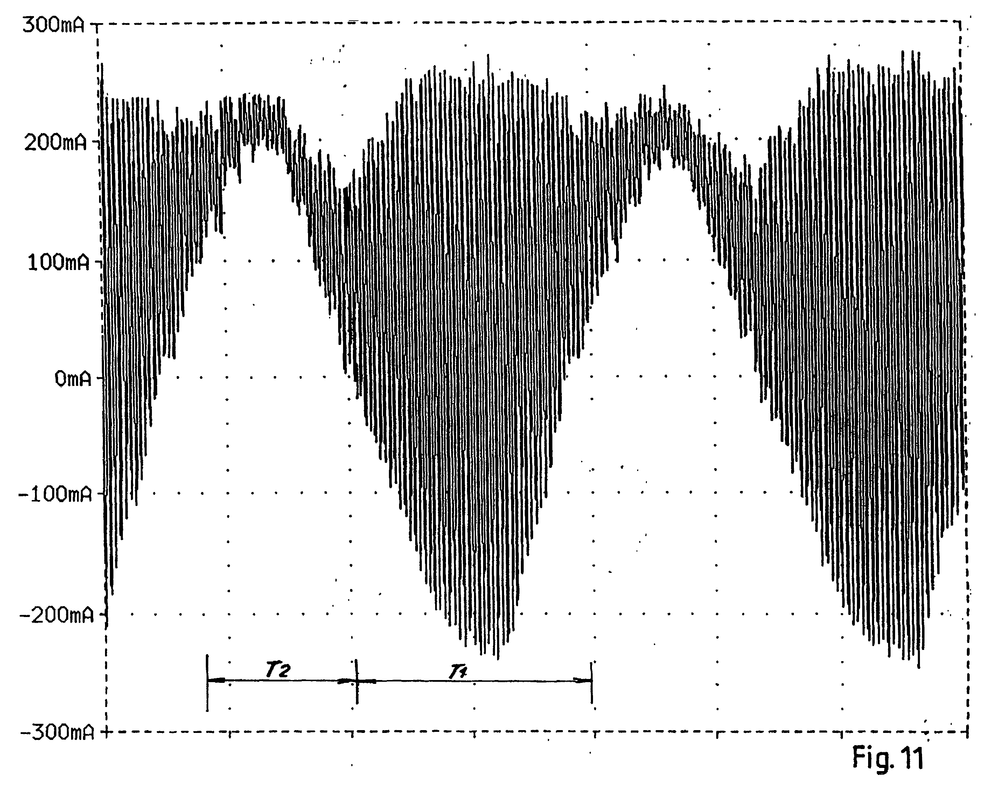

What is described above qualitatively can be appreciated quantitatively from the graphs of Figs. 11 to 13. Fig. 11 shows a diagram which plots the time as abscissa and the value of the current in the inductor 39 as ordinate. T1 indicates the time interval in which the capacitor 43 resonates with the inductor 39. It is readily observed that in the said time interval the current in the inductor 39 oscillates between relatively high extreme values, while in the absence of the capacitor 43 the value of the current would be almost equal to zero.

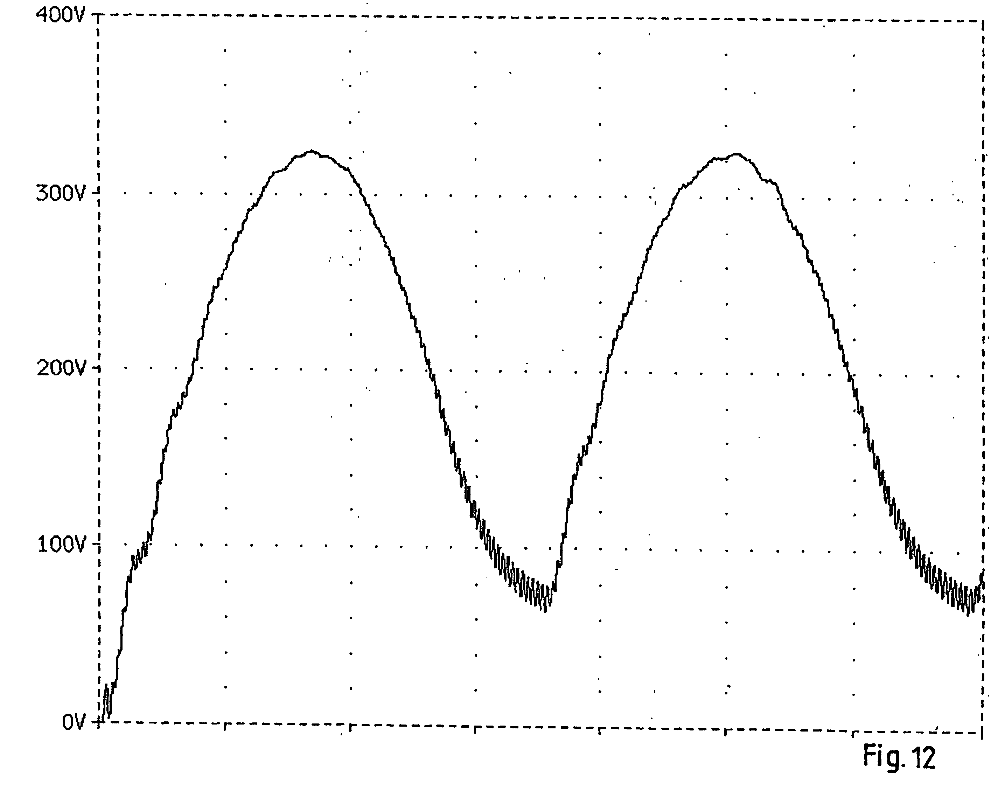

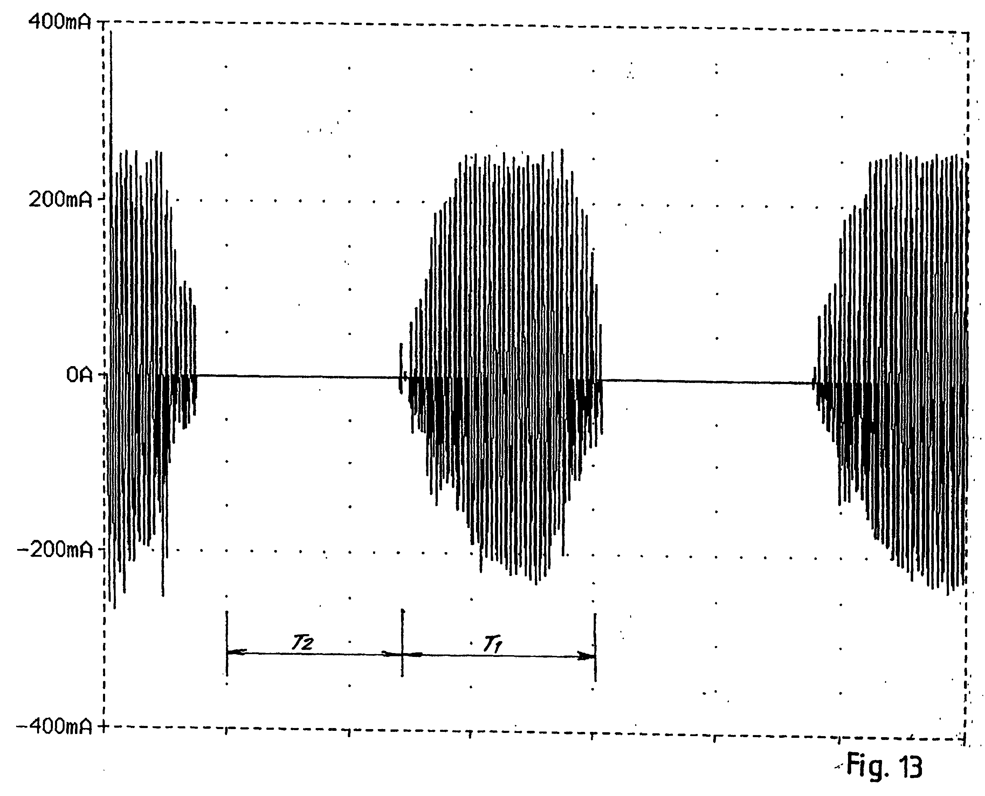

Plotted in Fig. 12 is the profile of the voltage across the rectifier bridge 25 versus time within the same time interval as shown in Fig. 11: it will be observed that the trajectories of the two graphs are in phase. Finally, Fig. 13 shows the profile of the current in the auxiliary capacitor 43. This current is zero for a time interval T2, while it oscillates between finite values in the time interval T1.

It is understood that the drawing shows merely an example given solely by way of practical demonstration of the invention, it being possible for this invention to vary in its forms and arrangements without thereby departing from the scope of the concept underlying the said invention. Any reference numerals present in the attached claims have the purpose of facilitating the reading of the claims with reference to the description and to the drawing, and do not limit the scope of protection represented by the claims.

## Claims

1. An inverter device for the power supply of a load (9, 11) comprising:
- a power supply section (3) with means of connection (17, 19) to an AC voltage source (21) and two poles (A, B) for connection to an inverter section, said power-supply section comprising a rectifier bridge (25) powered by said AC source (21) and said inverter section comprising a half bridge arrangement of controlled switching means (33, 35) for supplying a high-frequency voltage to said load (9, 11) through a resonant circuit (13, 15) connected to said inverter section;
- in parallel with said rectifier bridge and said half bridge arrangement, a filter capacitor (27) and a smoothing capacitor (29) for supplying a substantially continuous current to the inverter section (5), a unidirectional component (31) being arranged upstream of the smoothing capacitor (29) and downstream of said filter capacitor (27); said half bridge arrangement, said filter capacitor and said smoothing capacitor being arranged across said poles (A, B) through which the inverter section (5) is connected to said power supply section (3) and said load being connected to the centre of said half bridge and to a pole of said filter capacitor (27)
**characterized in that** said power-supply section (3) includes an inductor (39) arranged in series with said rectifier bridge (25), connected upstream of said half bridge arrangement and upstream of said resonant circuit (13, 15) said inductor having a value such that said power-supply section (3) exhibits a predominantly inductive behaviour towards the inverter section.

2. Device according to Claim 1, **characterized in that** the said unidirectional component (31) is arranged between a plate of the filter capacitor (27) and the corresponding plate of the smoothing capacitor (29).

3. Device according to Claim 1 or 2, **characterized in that** the said power-supply section (3) has an EMI filter (23) between the said rectifier bridge (25) and the said means of connection (17, 19) to the said AC voltage source (21).

4. Device according to Claim 1 or 2 or 3, **characterized in that** the said inductor (39) is arranged between the rectifier bridge (25) and the means of connection (17, 19) to the AC voltage source (21).

5. Device according to Claim 1 or 2 or 3, **characterized in that** the said inductor (39) is arranged between the rectifier bridge (25) and the said inverter section (5).

6. Device according to Claim 5, **characterized by** a diode (41) in parallel with the said filter capacitor (27).

7. Device according to one or more of the preceding claims, **characterized in that** the said inverter section (5) comprises an auxiliary capacitor (43) which resonates with the said inductor (39) when the voltage across the terminals of the rectifier bridge (25) passes through the zero value.

8. Device according to Claim 7, **characterized by** a unidirectional element (45) in parallel with the said auxiliary capacitor (45).

## Patentansprüche

1. Wechselrichter zum Speisen einer Last (9, 11), mit:
- einem Stromversorgungsabschnitt (3) mit Verbindungsmitteln (17, 19) an eine Wechselstromquelle (21) und zwei Polen (A, B) zum Anschließen an einen Wechselrichterabschnitt, wobei der Stromversorgungsabschnitt eine Gleichrichterbrücke (25) aufweist, die durch die Wechselstromquelle (21) gespeist wird, und der Wechselrichterabschnitt eine Halbbrückenanordnung von gesteuerten Schaltmitteln (33, 35) aufweist, um der Last (9, 11) über eine Resonanzschaltung (13, 15), die mit dem Wechselrichterabschnitt verbunden ist, eine Hochfrequenzspannung zuzuführen;
- einem Filterkondensator (27) und einem Glättkondensator (29) parallel zu der Gleichrichterbrücke und der Halbbrückenanordnung, um den Wechselrichterabschnitt (5) einen im wesentlichen kontinuierlichen Strom zuzuführen, wobei stromauf des Glättungskondensators (29) und stromab des Filterkondensators (27) eine in eine Richtung wirkende Komponente (31) angeordnet ist; wobei die Halbbrückenanordnung, der Filterkondensator und der Glättungskondensator parallel zu den Polen (A, B) angeordnet sind, durch welche der Wechselrichterabschnitt (5) an den Stromversorgungsabschnitt (3) angeschlossen ist, und die Last an die Mitte der Halbbrücke und an einen Pol des Filterkondensators (27) angeschlossen ist,
**dadurch gekennzeichnet, daß** der Stromversorgungsabschnitt (3) eine in Reihe mit der Gleichrichterbrücke (25) angeordnete Induktivität (39) aufweist, die stromauf der Halbbrückenanordnung und der Resonanzschaltung (13, 15) geschaltet ist, wobei die Induktivität einen solchen Wert hat, daß der Stromversorgungsabschnitt (3) gegenüber dem Wechselrichterabschnitt ein vorherrschend induktives Verhalten zeigt.

2. Vorrichtung nach Anspruch 1,
**dadurch gekennzeichnet, daß** die in eine Richtung wirkende Komponente (31) zwischen einer Platte des Filterkondensators (27) und der entsprechenden Platte des Glättungskondensators (29) angeordnet ist.

3. Vorrichtung nach Anspruch 1 oder 2,
**dadurch gekennzeichnet, daß** der Stromversorgungsabschnitt (3) ein EMI-Filter (23) zwischen der Gleichrichterbrücke (25) und den Verbindungsmitteln (17, 19) an die Wechselstromquelle (21) hat.

4. Vorrichtung nach Anspruch 1 oder 2 oder 3,
**dadurch gekennzeichnet, daß** die Induktivität (39) zwischen der Gleichrichterbrücke (25) und den Verbindungsmitteln (17, 19) an die Wechselstromquelle (21) angeordnet ist.

5. Vorrichtung nach Anspruch 1, 2 oder 3,
**dadurch gekennzeichnet, daß** die Induktivität (39) zwischen der Gleichrichterbrücke (25) und dem Wechselrichterabschnitt (5) angeordnet ist.

6. Vorrichtung nach Anspruch 5,
**gekennzeichnet durch** eine Diode (41) parallel zu dem Filterkondensator (27).

7. Vorrichtung nach einem oder mehreren der vorstehenden Ansprüche,
**dadurch gekennzeichnet, daß** der Wechselrichterabschnitt (5) einen Hilfskondensator (43) aufweist, der mit der Induktivität (39) in Resonanz tritt, wenn die Spannung parallel zu den Anschlüssen der Gleichrichterbrücke (25) den Null-Wert passiert.

8. Vorrichtung nach Anspruch 7,
**gekennzeichnet durch** ein in einer Richtung wirkendes Element (45) parallel zu dem Hilfskondensator (43).

## Revendications

1. Dispositif onduleur pour l'alimentation d'une charge (9, 11) comprenant :
- une section d'alimentation (3) avec des moyens de connexion (17, 19) à une source de tension alternative (21) et deux pôles (A, B) pour une connexion à une section onduleur, ladite section d'alimentation comprenant un pont redresseur (25) alimenté par ladite source alternative (21) et ladite section onduleur comprenant un agencement en demi-pont de moyens de commutation commandés (33, 35) pour délivrer une tension de haute fréquence à ladite charge (9, 11) par l'intermédiaire d'un circuit résonnant (13, 15) connecté à ladite section onduleur ;
- en parallèle avec ledit pont redresseur et ledit agencement en demi-pont, un condensateur de filtrage (27) et un condensateur de lissage (29) pour délivrer un courant sensiblement continu à la section onduleur (5), un composant unidirectionnel (31) étant agencé en amont du condensateur de lissage (29) et en aval dudit condensateur de filtrage (27) ; ledit agencement en demi-pont, ledit condensateur de filtrage et ledit condensateur de lissage étant agencés entre lesdits pôles (A, B) par lesquels la section onduleur (5) est connectée a ladite section d'alimentation (3) et ladite charge étant connectée au centre dudit demi-pont et à un pôle dudit condensateur de filtrage (27) ;
**caractérisé en ce que** ladite section d'alimentation (3) comprend une inductance (39) disposée en série avec ledit pont redresseur (25), connectée en amont dudit agencement en demi-pont et en amont dudit circuit résonnant (13, 15), ladite inductance ayant une valeur telle que ladite section d'alimentation (3) présente un comportement essentiellement inductif envers la section onduleur.

2. Dispositif selon la revendication 1, **caractérisé en ce que** ledit composant unidirectionnel (31) est disposé entre une armature du condensateur de filtrage (27) et l'armature correspondante du condensateur de lissage (29).

3. Dispositif selon la revendication 1 ou 2, **caractérisé en ce que** ladite section d'alimentation (3) comporte un filtre anti-interférence électromagnétique (23) entre ledit pont redresseur (25) et lesdits moyens de connexion (17, 19) à ladite source de tension alternative (21).

4. Dispositif selon la revendication 1, 2 ou 3, **caractérisé en ce que** ladite inductance (39) est disposée entre le pont redresseur (25) et les moyens de connexion (17, 19) à la source de tension alternative (21).

5. Dispositif selon la revendication 1, 2 ou 3, **caractérisé en ce que** ladite inductance (39) est disposée entre le pont redresseur (25) et ladite section onduleur (5).

6. Dispositif selon la revendication 5, **caractérisé par** une diode (41) en parallèle avec ledit condensateur de filtrage (27).

7. Dispositif selon une ou plusieurs des revendications précédentes, **caractérisé en ce que** ladite section onduleur (5) comprend un condensateur auxiliaire (43) qui forme une résonance avec ladite inductance (39) lorsque la tension aux bornes du pont redresseur (25) passe par la valeur zéro.

8. Dispositif selon la revendication 7, **caractérisé par** un élément unidirectionnel (45) en parallèle avec ledit condensateur auxiliaire (45).
